# EUROPEAN PATENT APPLICATION

(11) **EP 1 639 885 A1**
(43) Date of publication of application: **29.03.2006**
(21) Application number: 05108526.4
(22) Date of filing: 16.09.2005
(51) Int. Cl.: A01G 9/10

(54) **Biodegradable composite substrate for the growth of gamic and agamic propagation plants**

(30) Priority: 17.09.2004 IT MI20041777
(71) Applicant: Martini S.p.A., 43058 Coenzo di Sorbolo (Parma) (IT)
(72) Inventor: Martini, Novella, 43058, SORBOLO (Parma) (IT); Bargiacchi, Enrica, 57016, ROSIGNANO MARITTIMO (Livorno) (IT); Foschi, Lara, 56121, PISA (IT); Magni, Simone, 56123, PISA (IT); Martini, Fulvio, 43058, SORBOLO (Parma) (IT); Miele, Sergio, 56123, PISA (IT); Volterrani, Marco, 56017, SAN GIULIANO TERME (Pisa) (IT)
(74) Representative: Coppo, Alessandro

(57) **Abstract**

The present invention relates to a biodegradable composite substrate for the growth of plants with gamic and agamic propagation, comprising a matrix of a natural origin, a polyurethane-based polymer, water, and incorporating a specific polymer with a combined binding and fertilizing action. The substrate of the invention is used in the production of seed trays suitable for the development of seedlings and having a cubic, parallelepiped, cylindrical, truncated-conical or flat-tile shape.

## Description

The present invention relates to a biodegradable composite substrate for the development of plants with gamic or agamic propagation.

In particular, the present invention relates to a biodegradable and non-phytotoxic, aggregate composite material which can be used as a substrate for the germination of seeds and the growth of plants with gamic and agamic propagation.

The term gamic propagation plants refers to plants which propagate sexually, or through seeds, whereas agamic propagation plants refers to plants which multiply by means of different vegetative organs, such as stolons, cuttings, rhizomes, bulbs, etc.

Many agrarian crops are sown or transplanted or planted directly on site, whereas others are sown or transplanted or planted first in a protected environment, where they spend the first part of their cycle, until reaching the seedling phase, and are then transferred to fields or greenhouses where they complete their productive cycle.

Modern nursery techniques envisage the sowing of seeds or implantation of vegetative parts of plants in a suitable germination substrate (for seeds) or rooting substrate (for vegetative parts), which is maintained under optimum conditions of humidity, light and nutritive availability in specific protected structures, called seed-plots or nurseries. Subsequently, in order to reduce stress for the seedling after bedding, the procedure passed from transplanting "bare root" seedlings, obtained by tearing the seedlings themselves from the germination or rooting substrate, to the transplanting of seedlings having a small "loaf" of substrate, where most of the tiny root system grows. In this way, this does not undergo traumas and can rapidly restart its growth as soon as the seedling is transferred to its definite site: field or production greenhouse.

Germination or rooting substrates generally consist of peat, peat amendant compounds, agrarian soil, sand, expanded clay, perlite, pumice, vermiculite and the like, in various proportions, which are arranged in seed-trays or rooting trays.

More recently, various types of substrates have been proposed which do not need to be arranged in seed-trays or rooting trays as they are previously aggregated and kept in consistent forms, thanks to the use of binding synthesis substances.

One of these substances with a binding action consists of hydrophilic polyurethanes, whose prepolymers are mixed in different percentages with the different matrixes dispersed in water. After a suitable mixing and hardening phase, the coherent mass is obtained, which is arranged in suitable forms.

Numerous invention patents have been gradually proposed, with few variations, among which American patent 3,805,531 and then U.S. Patent 4,175,355 which indicates the minimum concentration of polyurethane as 15% by weight with respect to the dry product, below which the characteristics of the cube are unsatisfactory. American patent 5,209,014 discloses how, by varying the composition of the matrix, it is possible to reduce the concentration of polyurethane to 6-8% of the "ground turf mixture" of the matrix component, without diminishing the characteristics of the cube.

In other cases (U.S. Patent 3,373,009) fertilizing matrixes are considered, added to the prepolymers in a ratio of 65% of its weight before the reaction, or mineral matrixes, such as perlite and vermiculite (U.S. Patent 5,791,085) or seeds dispersed in water (U.S. Patent 3,812,619). In a series of subsequent patents, Dedolph (U.S. Patent 4,034,508; U.S. Patent 4,175,355; U.S. Patent 4,213,273; U.S. Patent 4,495,310) discovered the possibility of reacting the plastic material in situ with 20-80% of a mixture of soil and subsequently developed various transplanting systems on site of seedlings obtained starting from seeds sown on cubes of soil and polymer.

More recently, methods have been proposed for the preparation of an aggregate substrate with a minimum quantity of binding agent (3-10% of the matrix) in view of specific reaction conditions (international patent application WO 96/25031) or the addition, to the hydrophilic urethane prepolymer, of a glycol and a plasticizer before the reaction with water (American patent application U.S. 2004/049980). This latter patent application envisages the addition of the prepolymer to the matrix, in a ratio of 6-40% of the matrix itself; this consists of peat, coconut fiber, perlite, vermiculite, pumice, bentonite, methocel, wood pulp, bark or sawdust and their mixtures. The same application also indicates that the glycol can be ethylene, diethylene or triethylene glycol, and the plasticizer dioctyl phthalate, tricresyl phosphate, or diiso-octylphthalate. Fertilizers, amendants and micronutritive agents can also be present as well as wetting agents.

The known art described above is not without drawbacks however.

With respect to an increase in the consistency and porosity of the substrate with an increase in the concentration of polyurethane, the presence of the latter not only increases the costs, but also induces negative phenomena in the plant which are manifested by delayed growth.

From the point of view of environmental compatibility, the use of plasticizers creates numerous problems at the expense of the biocompatibility of the cubes of substrate, should this be inserted in agrarian ground and, more generally, in an unlimited environment. In this respect, the International Agency for Cancer Research has classified dioctyl phthalate, one of the plasticizers used in the known art, as a "possible carcinogenic agent for human beings", whereas Nalli et al. [in: Biodegradation 13:343-352, 2002], after pointing out that "more serious problems associated with the use of these mobile plasticizers can be their long-term effects as endocrine destroyers, i.e. of hormone-like substances which can cause the destruction of the normal embryonic development and reproductive success of organisms", found that plasticizers are difficult to biodegrade on the part of micro-organisms, and, in particular, one of their metabolites, 2-ethyl-hexanoic acid, is extremely toxic and reluctant to further degradation. To these results, those of other researchers were added [Cartwright et Al. In: Environ. Toxicol. Chem. 19:1253-1261, 2000].

The invention described below overcomes or at least significantly attenuates the problems indicated above.

One of the main objectives of the invention consists in providing a biodegradable composite substrate for the growth of gamic and agamic propagation plants, which has a high environmental biodegradability and allows application on vast cultivable surfaces.

A further objective of the invention consists in providing a biodegradable composite substrate for the growth of gamic and agamic propagation plants, which can be easily effected with low production costs.

Another objective of the invention consists in providing a self-supporting biodegradable composite substrate for the growth of plants, which has both fertilizing and water retention (microporosity) and air retention (macroporosity) properties.

The objectives of the present invention are achieved by means of the biodegradable composite substrate specified in claim 1.

Further characteristics of the composite substrate according to the invention are indicated in the subsequent dependent claims 2-8.

According to a first aspect of the invention, a biodegradable composite substrate for the growth of gamic and agamic propagation plants is therefore provided, comprising a matrix of a natural origin, a polyurethane-based polymer, water, said substrate being characterized in that it incorporates a biodegradable binding and fertilizing polymer.

The term biodegradable binding and fertilizing polymer refers to a biodegradable polymeric or copolymeric material provided with both binding properties for aggregating the various components of the composite substrate itself and also fertilizing properties which contribute to assisting the growth of the vegetative components of the seedlings propagated or sown.

A particularly suitable binding and fertilizing polymer comprises a urea-formaldehyde polymer. More specifically, urea-formaldehyde is a polymer which, in addition to exerting a fertilizing action thanks to the presence of nitrogen and its capacity of slow release into the environment, also has binding characteristics which synergize with the binding properties of polyurethane polymers.

More specifically, the object of the invention relates to a biodegradable, aggregate composite substrate, with porosity and flexibility characteristics suitable for hosting the root systems of plants, comprising 50-85% of water on the product as such, 8-20% of a matrix of a natural origin; 1-10% of a polyurethane-based polymer, either aliphatic or aromatic; 0.1-20%, and preferably 1-10%, of a urea-formaldehyde polymer.

The term matrix of a natural origin comprises: peat, soil, peat amending compound, green and/or mixed composted amendant, coconut fiber, bark, kenaf fiber, hemp, cotton and Miscanthus, paper and secondary raw materials of the textile, food, paper and wood industries, pennon, wool waste, oil-extracted panels, toasted leather, integrated pellicle, carbohydrates, and their mixtures. Peat is among the preferred matrixes of an organic nature in the scope of the invention.

In particular, the carbohydrates are preferably starchy substances, such as cereal meal, sugars, molasses and their mixtures. The carbohydrates exert, in the scope of the composite of the invention, both an adhering function and a nutritive source thanks to the presence of carbon.

The polyurethane polymers present in the biodegradable composite substrate essentially have a binding and supporting function.

Suitable polyurethane-based prepolymers comprises aliphatic or aromatic prepolymers of hydrophilic polyurethane, such as polyol reaction products, preferably a polyoxyethylene polyol such as a polyisocyanate. Suitable polyurethane-based polymers include those polymers available on the market under the trade-name of HYPOL®, such as those, for example, described in American patent 3,812,619 which is fully incorporated herein as reference.

Particularly suitable polyurethane-based polymers are hydrophilic polyurethanes of the aromatic type such as those deriving from aromatic polyisocyanates, preferably TDI or MDI or aliphatic polyurethanes, preferably IPDI or HDI.

Mineral components such as: zeolites, rock wool, pozzolan, pumice, vermiculite, perlite, expanded clay, bentonite, and their mixtures, can be conveniently added to the formulation described above, in all proportions, typically in quantities equal to 0.1-10% with respect to the product as such.

One of the preferred embodiments of the substrate of the invention contains zeolites.

Suitable zeolites can be of a synthetic or natural nature, among which, in particular, clinoptiloliths. These mineral fractions have the capacity of retaining water, air and nutritive components of the aggregate substrate and, in the type of embodiment in question, they contribute to exerting a complementary action as a binding agent, when suitably mixed with the polyurethane polymer, and also as a substrate for the settlement of microbial flora which effects the biodegradation of the aggregate substrate.

Either bare or coated seeds, preferably of the lawn species, and more preferably of plants selected from Festuca arundinacaea, Festuca rubra, Lolium perenne, Agrostis stolonifera, Dichondra repens, Poa pratensis and Cynodon dactylon, and vegetative parts which are suitable for the multiplication of plants, preferably stolons and cuttings, more preferably stolons of Cynodon dactylon, Cynodon dactylon x transvaalensis, Agrostis stolonifera, Paspalum vaginatum, Zoyzia spp. and cuttings of Vitis spp., Olea spp., Pyrus spp., Malus spp., Prunus spp. and aromatic plants, officinal and ornamental, can also be conveniently added to the formulation described above.

The following products can also be typically added to the formulation of the invention: fertilizers, wetting agents, phyto-drugs, pH and salinity regulators, strains of microorganisms with a phytoprotective and coadjuvant action in nutrition (among which, for example: Tricoderma viridis, Azospirillum brazilense, Rhizobium spp., Micorrize, etc.) .

According to another aspect, seed-trays based on the biodegradable aggregate composite substrate of the invention suitable for applications in the agricultural field, are provided.

According to an aspect of the invention, said biodegradable composite substrate can be produced by mixing the matrix of a natural origin, the polyurethane-based polymer, the binding polymer and fertilizer with water.

The order of addition of the various components is not critical, even though it can be convenient to initially dry mix the matrix of a natural origin with the binding polymer and fertilizer, subsequently add water and finally the hydrophilic urethane prepolymer.

When the polyurethane prepolymer is in contact with water, the curing process is triggered, which causes the hardening of the substrate and the formation of open polyurethane cells which englobe the process air (macroporosity) and water (microporosity).

The reaction conditions vary in relation to the prepolymer used, so that with polyurethane prepolymers with rapid hardening, it is convenient to control the reaction rate by slowly adding water at room temperature according to operating procedures well-known to experts in the field, or it may be preferable to add cold water, also having temperatures below 10°C.

The mixing phase is effected under operating conditions which vary in relation to the type of matrix of a natural origin used. Denser or harder starting materials require more vigorous stirring whereas less viscous materials are mixed more lightly according to common operating procedures in the field of the art.

After the curing phase, the aggregate material typically has the following indicative composition (Table 1).

**Table 1 - Physico-chemical and microbiological characteristics of an embodiment of the aggregate substrate of the invention.**

| Parameters | Measurement unit | Most frequent value range |
|---|---|---|
| Humidity | % | 60-80 |
| Apparent specific weight | KgL⁻¹ | 0.5-0.6 |
| pH | | 5.5-6.5 |
| Electric conductivity | µScm⁻¹ | 200-300 |
| Total nitrogen | % | 4-6 |
| Total bacterial charge | UFCg⁻¹ | 1-3 10⁶ |
| Enterobacteria | UFCg⁻¹ | 1.5-2 10³ |
| Yeasts | UFCg⁻¹ | 5-710³ |
| Salmonella spp. | 25 g | Absent |

According to an embodiment of the invention, the aggregate substrate of the invention is used in the production of seed-trays suitable for the growth of seedlings and having typical shapes such as cylindrical, cubic, truncated-conical, parallelepiped, or flat tile-shaped in various forms, or continuous roll. The substrate or seed-tray of the invention, containing the germinated seed or seedling, is then sown, transplanted or planted in suitable mediums or cultivation environments.

Parallelepiped-shaped seed-trays are provided, for example, which can be classified in three types of base with the following dimensions: small (3.0 x 1.8 x 1.8 cm), medium (3.0 x 2.8 x 2.8 cm) and large (4.0 x 2.8 x 2.8 cm). At the top of the parallelepiped there is typically a X-shaped hole to allow the deposition of the seed or introduction of the vegetative parts. A second type of seed-tray, on the other hand, is characterized by an apical hemispherical hole in which the seed is deposited.

In a second embodiment, the aggregate substrate is produced, on the other hand in mats or tiles which already contain seeds or vegetative parts suitable for the multiplication of plants. These mats preferably have a thickness of 15-30 mm and dimensions of 30 x 60 cm, even if they can be prepared in the widest variety of geometrical and figurative forms.

Some of the advantages obtained with the invention with respect to the known art are the following:
- improved physico-chemical conditions for the germination of seeds and the growth of the root system of plants, without any phytotoxicity;
- improved growth of plants which more rapidly reach the phase suitable for their transfer to a definite positioning (in fields or production greenhouses);
- once the aggregate substrate has been introduced into the agrarian ground, it is more easily biodegraded of analogous known aggregate substrates. The biodegradation of some embodiments of the substrate of the invention is completed within a period of 6-12 months, depending on the environmental conditions;
- the aggregate substrate of the invention can also easily sustain microbiological life, thanks to the presence of the coformulants present, among which above all carbohydrates and zeolites. It is therefore particularly suitable for the life of plants which favour the establishment of exchange relationships with microorganisms, such as: Azospirilli, Rizobi and Micorrize.

The following examples are provided for purely illustrative purposes of the present invention and should not be considered as limiting its protection scope, as defined by the enclosed claims.

### Example 1

An embodiment of the present invention was prepared in which the aggregate substrate was obtained by mixing a formulation consisting of: water (60% w/w a.s.), black peat (25% w/w a.s.), polyurethane prepolymer of the type methylenebis-isocyanatebenzene (MDI) (6% w/w a.s.), urea-formaldehyde polymer in powder form with a nitrogen titer of 28% (4% w/w a.s.), molasses (3% w/w a.s.) and zeolite (2% w/w a.s.). This formulation - after suitable mixing and at the end of the curing phase - had a humidity degree of 80% w/w a.s. The substrate in question was prepared in different forms (cubes, tiles, strips) according to the specific purposes.

### Example 2

An embodiment of the present invention was prepared in which the aggregate substrate was obtained by mixing a formulation consisting of: water (60% w/w a.s.), green composted amendant (23% w/w a.s.), MDI polyurethane prepolymer (7% w/w a.s.), urea-formaldehyde polymer in powder form with a nitrogen titer of 25% (3% w/w a.s.), cereal flour (5% w/w a.s.) and clinoptilolite (2% w/w a.s.). This formulation - after suitable mixing and at the end of the curing phase - had a humidity degree of 75% w/w a.s. The substrate in question was prepared in different forms according to the specific purposes (cubes, tiles, strips, etc.).

### Example 3

An embodiment of the present invention was prepared in which the formulation of Example 2, after the addition of water and suitable mixing, was left to cure on a bed consisting of a thin layer of expanded clay, having a particle-size of 1.5-2.5 mm. An aggregate substrate was thus obtained which englobes a draining layer of expanded clay in its underlying part. Other suitable materials which can advantageously substitute expanded clay for this purpose have also proved to be rock wool and perlite. Once ready, the substrate in question can be prepared in various forms according to the specific purposes (cubes, tiles, strips, etc.).

### Example 4

A germination test of a series of vegetable species was effected on the aggregate substrate of the invention compared to peat. The test was carried out in a controlled environment, under the conditions defined by the Official Seed Analysis Methods (MAF, 1992). The results are specified in Table 2 below.

**Table 2 - Percentage of germinated seeds with respect to the whole.**

| Species | Seed-tray of the invention % | Peat % |
|---|---|---|
| *Lycopersicon esculentum* | 100 | 80 |
| *Cucumis melo* | 90 | 65 |
| *Solanum melongena* | 100 | 100 |
| *Lactuca sativa* | 90 | 95 |
| *Cycorium intybus* | 80 | 55 |
| *Cichorium indivia* | 90 | 65 |
| *Eruca sativa* | 95 | 85 |
| *Lepidium sativum* | 100 | 100 |
| *Valeriana officinalis* | 90 | 75 |

### Example 5

An embodiment of the present invention was prepared, in which seeds of Festuca arundinacaea were added to the formulation of Example 1 in a ratio of 40-60 grams/m². After suitable mixing, the substrate was prepared for curing in the form of a thin mat which - at the end of the curing phase - had a thickness of 15-25 mm. When left to germinate, the mat of aggregate substrate produced a high-quality lawn. Other seeds which were advantageously adopted for this type of use were: Festuca rubra (20-30 grams/m²); Lolium perenne (40-60 grams/m²); Agrostis stolonifera (4-6 grams/m²); Cynodon dactylon (8-12 grams/m²); Dichondra repens (8-12 grams/m²); Poa pratensis (10-20 grams/m²).

### Example 6

An embodiment of the present invention was prepared, in which stolons of Paspalum vaginatum were added to the formulation of Example 1 in a ratio of 30-100 grams/m². After suitable mixing, the substrate was prepared for curing in the form of a thin mat which - at the end of the curing phase - had a thickness of 30-40 mm. When left to germinate, the mat of aggregate substrate produced a high-quality lawn. Cynodon dactylon x transvaalensis and Zoysia japonica were also advantageously adopted for this type of use.

### Example 7

An embodiment of the present invention was prepared in which the formulation of Example 1 was used to sustain the first growth phases of plants compared with peat.

The test was carried out in the experimental station of the Agronomy Department and Agroecosystem Running of the University of Pisa (Dipartimento di Agronomia e Gestione dell'Agroecosistema dell' Università di Pisa); the species used was maize (Zea mais); the experimental scheme adopted was the randomized block scheme with three replications. The plateaus (both those filled with peat and those containing the substrate of the invention) were positioned in the open air and were irrigated daily (a daily intervention). The determination of the biometric parameters was effected 10 days after sowing.

From the results so far obtained it was observed that the germination was not influenced by the different composition of the substrate whereas the growth of the plants in the substrate of the invention proved to be much greater with respect to that obtained with traditional peat (Table 3).

**Table 3: Number of completely developed leaves and fresh weight of the leaves, stem and total biomass area of the single plants.**

| Thesis | Nr. of completely developed leaves | Wt. of completely developed leaves mg | Weight of stem mg | Wt. of total biomass area mg |
|---|---|---|---|---|
| Peat | 1.9 | 439 | 739 | 1179 |
| Substrate of the invention | 2.0 | 572 | 1225 | 1797 |

## Claims

1. A biodegradable composite substrate for the growth of gamic or agamic propagation plants, comprising a matrix of a natural origin, a polyurethane-based polymer, water, **characterized in that** it incorporates a biodegradable binding and fertilizing polymer.

2. The composite substrate according to claim 1, **characterized in that** said binding and fertilizing polymer is a urea-formaldehyde polymer.

3. The composite substrate according to claim 1 or 2, **characterized in that** said polyurethane-based polymer is a toluenediisocyanate (TDI) polymer or methylenebis(isocyanatebenzene) (MDI) polymer or their mixtures.

4. The composite substrate according to any of the claims 1-3, **characterized in that** said matrix of a natural origin is selected from the group comprising peat, soil, peat amending compound, zeolite, green and/or mixed composted amendant, coconut fiber, bark, kenaf fiber, hemp, cotton and Miscanthus, paper, secondary raw materials of the textile, food, paper and wood industries, pennon, wool waste, oil-extracted panels, toasted leather, integrated pellicle, carbohydrates, perlite, vermiculite, pumice, rock wool, pozzolan, bentonite, expanded clay, sawdust, wood pulp, and their mixtures.

5. The composite substrate according to claim 4, **characterized in that** said matrix of a natural origin is essentially based on peat.

6. The composite substrate according to any of the claims 1-5, **characterized in that** it comprises 50-85% of water, 8-20% of a matrix of a natural origin; 1-10% of a polyurethane; 0.1-20% of a urea-formaldehyde polymer.

7. The composite substrate according to any of the claims 1-6, **characterized in that** it additionally comprises zeolite.

8. The composite substrate according to any of the claims 1-7, **characterized in that** it additionally comprises seeds and/or vegetative parts of plants.

9. The composite substrate according to any of the claims 1-8, **characterized in that** it comprises peat, a toluenediisocyanate (TDI) or methylenebis(isocyanatebenzene) (MDI) polyurethane polymer, a urea-formaldehyde polymer, seeds and/or vegetative parts of plants.

10. The composite substrate according to any of the claims 1-8, **characterized in that** it comprises peat, a toluenediisocyanate (TDI) or methylenebis(isocyanatebenzene) (MDI) polyurethane polymer, a urea-formaldehyde polymer, zeolite, seeds and/or vegetative parts of plants.

11. The composite substrate according to claim 9 or 10, **characterized in that** it additionally comprises at least one carbohydrate.

12. The composite substrate according to any of the claims 1-11, **characterized in that** it is in a form selected from cubic, cylindrical, truncated-conical, parallelepiped, tile or continuous roll forms.

13. Use of a biodegradable composite substrate according to any of the claims 1-11 for the germination of seeds, the growth of plants or the multiplication of vegetative parts of plants.

14. A seed-tray for the germination of seeds and the growth of plants **characterized in that** it comprises a substrate according to any of the claims 1-11.
